# EUROPEAN PATENT SPECIFICATION

(11) **EP 3 569 474 B1**
(45) Date of publication and mention of the grant of the patent: **07.09.2022**
(21) Application number: 18172334.7
(22) Date of filing: 15.05.2018
(51) Int. Cl.: B62D 5/00, B60R 1/00, B62D 15/02, B62D 6/02, B62D 5/04, B62D 6/00

(54) **APPARATUS, METHOD AND COMPUTER PROGRAM FOR PROVIDING A STEERING ANGLE CONTROL SIGNAL FOR A VEHICLE**
VORRICHTUNG, VERFAHREN UND COMPUTERPROGRAMM ZUR ERZEUGUNG EINES LENKWINKELSTEUERSIGNALS FÜR EIN FAHRZEUG
APPAREIL, PROCÉDÉ ET PROGRAMME D'ORDINATEUR POUR FOURNIR UN SIGNAL DE COMMANDE D'ANGLE DE BRAQUAGE POUR UN VÉHICULE

(43) Date of publication of application: 20.11.2019
(73) Proprietor: Volkswagen AG, 38440 Wolfsburg (DE); MAN Truck & Bus SE, 80995 München (DE); Scania CV AB, 151 87 Södertälje (SE)
(72) Inventor: Buburuzan, Teodor, 38118 Braunschweig (DE); Hehn, Thorsten, 85055 Ingolstadt (DE); Zielinski, Ernst, 44803 Bochum (DE); Cerwall, Joakim, 11352 Stockholm (SE); Alieiev, Roman, 39576 Stendal (DE)
(74) Representative: 2SPL Patentanwälte PartG mbB

(56) References cited:
- EP-A1- 1 371 541
- EP-A1- 2 965 965
- EP-A2- 1 481 875
- EP-A2- 1 600 356
- US-A1- 2016 044 284

## Description

The present invention relates to an apparatus, a method and a computer program for providing a steering angle control signal for a vehicle and a vehicle comprising such an apparatus, more specifically, but not exclusively, to adjusting a steering angle of a vehicle if the vehicle is configured to move backwards.

Reversing is in many cases one of the most difficult maneuvers with a vehicle. Many people simply avoid reversing, especially if the operation is complicated and contains a combination of twists and turns. Examples are well-known, e.g. reversing into tight parking spaces in parking garages going around vehicles and pillars; reversing down or up a spiraling road; or reversing on narrow roads where the passage forward is blocked.

For simpler cases, the approach may be to rely on automation, e.g. by introducing specialized parking features for horizontal and/or vertical parking. For the more complicated cases, this might not be enough. A more straight-forward and general approach leaving the driver still in control may be desired. For some cases, it might be possible to use a tablet or a special terminal to guide the vehicle while reversing, stepping outside of the vehicle. Still, there are many situations where the driver prefers to remain in the vehicle while reversing - examples could be safety reasons, or locations (e.g. narrow roads with walls) where it might not be possible to get outside the vehicle.

European patent 2 794 353 B1 provides a vehicle rear monitoring system, in which a rear camera is used to capture an image of scenery to the rear of the vehicle. This image is shown to a driver of the vehicle via display. A different approach is chosen in German Patent Application DE 10 2014 007 796 A1, where parking assistance functions are shown on a head-up display of a vehicle.

European patent applications EP 1 481 875 A2, EP 1 371 541 A1 and EP 1 600 356 A2 disclose methods and systems, in which a steering angle is adjusted if a vehicle is driving backwards instead of forwards, e.g. to avoid oversteering if the vehicle is moving backwards. Additionally, the steering angle may depend on a velocity of the vehicle, and may vary depending on whether the vehicle is driving or performing a parking maneuver.

EP 1 600 356 A2 relates to a steering system for a vehicle, in particular for a motor vehicle, with a device for changing the steering angle ratio between a steering angle entered at a steering handle and a steering angle of a steerable wheel and/or with a device for changing the assisting steering torque with a control device for the device for changing the steering angle ratio or the assisting steering torque, the control device processing signals from a rotational speed sensor on a wheel of the vehicle or a driving speed sensor and signals from a steering angle sensor on the steering handle. In order to provide a steering system that is less sensitive to steering angle changes at the steering handle during reverse driving and enables easy and safe reverse driving, it is provided that a signal of a driving direction sensor is processed by the control device of the device for changing the steering angle ratio or the assist steering torque, and the steering angle ratio and/or the assist steering torque is controlled during reverse driving of the vehicle.

In US patent application US 2016/0044284 A1, a panoramic rear view is introduced, which combines the video signal of multiple cameras to provide a panoramic viewpoint of the area around the back (and front) of a vehicle.

There may be a desire for an improved concept, which allows a driver to better control a vehicle while moving backwards. The invention is defined by the appended claims.

Embodiments are based on the finding that driving backwards may be facilitated if the handling of the vehicle while moving backwards is similar to a handling of the vehicle while going forwards. It may be easier to control the vehicle while going backwards if it is possible to get a driving experience as if driving forwards, which may feel intuitively easier for many drivers. New technology in terms of sensor, cameras, head-up displays and drive-by-wire open up new possibilities.

Embodiments provide a method for providing a steering angle control signal for a vehicle. The method comprises obtaining information related to an angle of rotation of a steering wheel of the vehicle. The method further comprises obtaining information related to a direction of driving of the vehicle. The information related to the direction of driving indicates, whether the vehicle is configured to move forwards or whether the vehicle is configured to move backwards. The method further comprises determining a steering angle for the vehicle based on the angle of rotation of the steering wheel and based on the information related to the direction of driving of the vehicle. The steering angle is adjusted based on an adjustment function if the vehicle is configured to move backwards. The steering angle is adjusted based on the adjustment function such that a handling of the vehicle while moving backwards mimics a handling of the vehicle while moving forwards. The method further comprises providing the steering angle control signal based on the determined steering angle. The method further comprises providing a rear-view video signal to a head up display of the vehicle. The method further comprises processing a rear view camera signal to determine the rear view video signal, wherein the rear view camera signal is processed so that the rear view video signal mimics a view through the rear window of the vehicle when displayed by the head up display.

Adjusting the steering angle when the vehicle is configured to move backwards (if the vehicle is in reverse) may enable a more intuitive control of the vehicle in reverse. In at least some embodiments, the steering angle is adjusted based on the adjustment function such that, if the angle of rotation of the steering wheel is changed, a change in the steering angle if the vehicle is configured to move backwards is smaller than a change in the steering angle if the vehicle is configured to move forwards. This may enable aligning the handling of the vehicle going forwards and backwards for vehicles, for which only the front wheels are controlled by the steering wheel. The steering angle is adjusted based on the adjustment function such that a handling of the vehicle while moving backwards mimics a handling of the vehicle while moving forwards. This may enable a more intuitive steering/handling of the vehicle while moving backwards.

The method comprises providing a rear view video signal to a head up display of the vehicle. For example, the head up display may be implemented using a front window (e.g. windshield) of the vehicle. When a rear view video signal is displayed using the head up display and the steering angle is adjusted accordingly, the driver of the vehicle can keep their usual driving position and steer the vehicle backwards as if they were steering it forwards.

In at least some embodiments, the method further comprises determining information related to a heading of the vehicle while moving backwards based on the determined steering angle. The provided rear view video signal may comprise (an overlay of) a projection of the heading of the vehicle moving backwards. This may further facilitate steering the vehicle moving backwards.

In at least some embodiments, the rear view video signal comprises a horizontally mirrored version of a rear view camera signal of a rear view camera of the vehicle. Alternatively, the rear view video signal may comprise an un-mirrored version of the rear view camera signal of the rear view camera of the vehicle. The adjustment function may be adapted to reverse a steering motion of the steering wheel comprised in the information related to the angle of rotation of the steering wheel in the determination of the steering angle. Reversing either the steering or the video signal may enable reconciling the video signal and the steering of the vehicle.

In some embodiments, the method further comprises determining a distance sensor data overlay for the rear view video signal based on distance sensor data. The rear view video signal may be provided to the head up display of the vehicle with the distance sensor data overlay. This may help the driver of the vehicle to detect hidden objects and assess the distance between the vehicle and other vehicles or road structures.

Alternatively or additionally, the method may further comprise determining a map overlay for the rear view video signal based on mapping data. The rear view video signal may be provided to the head up display of the vehicle with the map overlay. This may further help the driver in steering the vehicle.

The method comprises processing a rear view camera signal to determine the rear view video signal. The rear view camera signal is processed so that the rear view video signal mimics a view through the rear window of the vehicle when displayed by the head up display. This may enable a more intuitive steering of the vehicle moving backwards while looking to the front.

In various embodiments, the method further comprises providing a throttle control signal to an engine of the vehicle. For example, the providing of the throttle control signal may be based on the information related to a direction of driving. The throttle control signal may be limited by a throttle threshold if the vehicle is configured to move backwards. For example, the method may further comprise determining information related to a distance of the vehicle to one or more objects behind the rear of the vehicle based on distance sensor data. The throttle control signal may be provided to the engine of the vehicle based on the information related to the distance of the vehicle to the one or more objects. Providing the throttle control signal with adjustments to backward driving may help adjusting the handling of the vehicle while moving backwards to mimic the handling of the vehicle while going forwards.

Embodiments further provide a computer program having a program code for performing the method, when the computer program is executed on a computer, a processor, or a programmable hardware component.

Embodiments further provide an apparatus for providing a steering angle control signal for a vehicle. The apparatus comprises at least one interface and a control module. The control module is configured to obtain information related to an angle of rotation of a steering wheel of the vehicle via the at least one interface. The control module if further configured to obtain information related to a direction of driving of the vehicle via the at least one interface. The information related to the direction of driving indicates whether the vehicle is configured to move forwards or whether the vehicle is configured to move backwards. The steering angle is adjusted based on the adjustment function such that a handling of the vehicle while moving backwards mimics a handling of the vehicle while moving forwards. The control module is further configured to determine a steering angle for the vehicle based on the angle of rotation of the steering wheel and based on the information related to the direction of driving of the vehicle. The steering angle is adjusted based on an adjustment function if the vehicle is configured to move backwards. The control module is further configured to provide the steering angle control signal via the at least one interface based on the determined steering angle. The control module is configured to provide a rear-view video signal to a head up display of the vehicle. The control module is configured to process a rear view camera signal to determine the rear view video signal, wherein the rear view camera signal is processed so that the rear view video signal mimics a view through the rear window of the vehicle when displayed by the head up display.

Embodiments further provide a vehicle comprising the apparatus.

Some other features or aspects will be described using the following non-limiting embodiments of apparatuses or methods or computer programs or computer program products by way of example only, and with reference to the accompanying figures, in which:
Figs. 1a and 1b show flow charts of embodiments of a method for providing a steering angle control signal for a vehicle; and
Figs. 2a and 2b show block diagrams of embodiments of an apparatus for providing a steering angle control signal for a vehicle.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

At least some embodiments are related to providing a front view while driving backwards. At least some embodiments may make use of sensors, remote driving, connectivity.

Utilizing sensors and cameras mounted in the back of the car, in at least some embodiments, the rear view may be projected on a head-up display for the driver. The driver may still be in the normal driving position, and may drive in a normal way - as if driving forwards. In a sense, it may be like using the normal driving position as a "remote driving position" when reversing. This may be implemented through adapting the steering (e.g. by providing the steering angle control signal and determining the steering angle) through software so that the vehicle responds in the right way (e.g. by adjusting the steering angle based on the adjustment function). This may comprise limiting the turning angle such that it feels as if driving forward, thus being able to turn the steering wheel less than usual. Sensors and access to high definition maps (if available) may also help the driver, and may help that the vehicle will stay on the road, and not move into other objects. Vehicle speed may be limited (e.g. by providing the throttle control signal), matching normal reversing behavior.

In at least some embodiments, the approach may be extended as a solution for vehicles with a trailer (e.g. trucks). In this case, sensors (e.g. the distance sensor) and cameras (e.g. the rear view camera) may be mounted also on the trailer. The steering may also be adapted (e.g. based on the adjustment function).

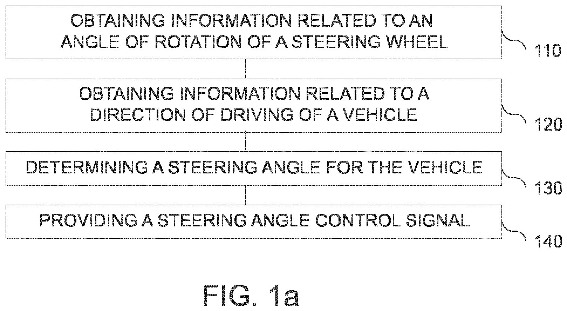

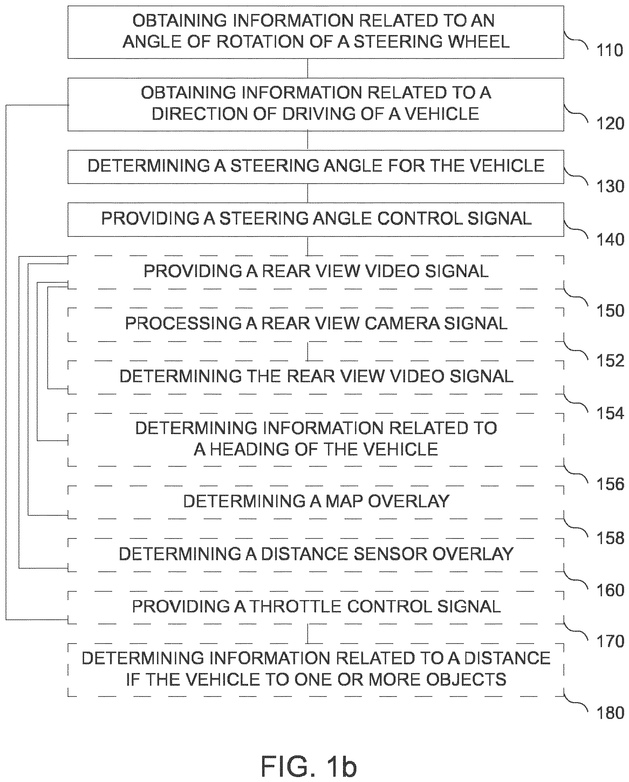

Figs. 1a and 1b show flow charts of embodiments of a method for providing a steering angle control signal for a vehicle 100. The method comprises obtaining 110 information related to an angle of rotation of a steering wheel of the vehicle 100. The method further comprises obtaining information related to a direction of driving of the vehicle. The information related to the direction of driving indicates, whether the vehicle 100 is configured to move (e.g. drive) forwards or whether the vehicle is configured to move (e.g. drive) backwards. The method further comprises determining 130 a steering angle for the vehicle 100 based on the angle of rotation of the steering wheel and based on the information related to the direction of driving of the vehicle 100. The steering angle is adjusted based on an adjustment function if the vehicle 100 is configured to move backwards. The method further comprises providing 140 the steering angle control signal based on the determined 130 steering angle.

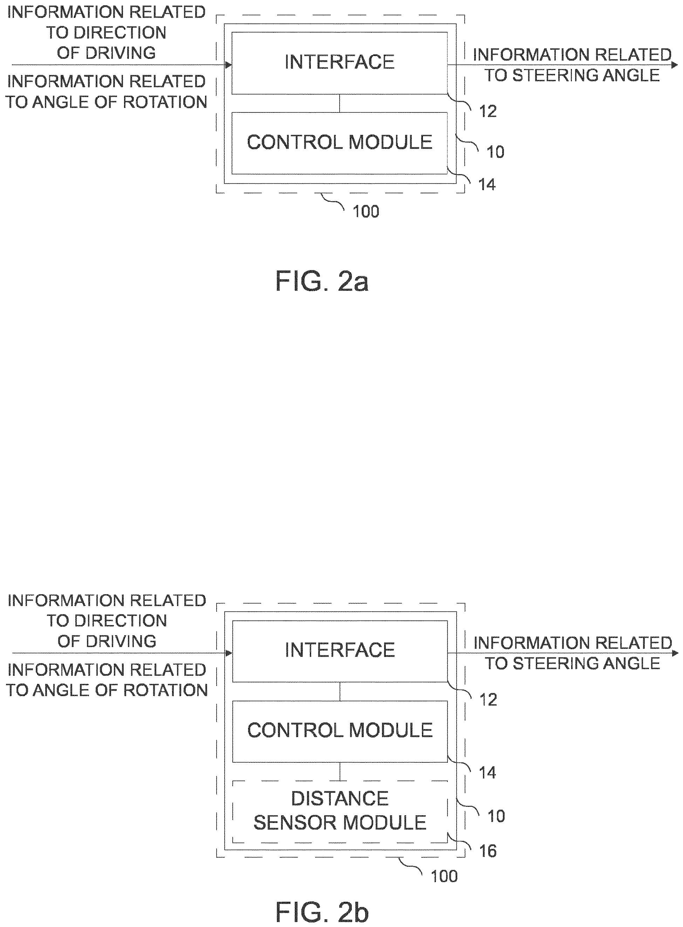

Figs. 2a and 2b show block diagrams of embodiments of a corresponding apparatus 10 for providing the steering angle control signal for the vehicle 100. The apparatus comprises at least one interface 12 and a control module 14, coupled to the at least one interface. The control module 14 is configured to obtain the information related to an angle of rotation of a steering wheel of the vehicle 100 via the at least one interface 12. The control module 14 is further configured to obtain the information related to the direction of driving of the vehicle 100 via the at least one interface 12. The control module 14 is further configured to determine the steering angle for the vehicle 100 based on the angle of rotation of the steering wheel and based on the information related to the direction of driving of the vehicle. The steering angle is adjusted based on the adjustment function if the vehicle 100 is configured to move backwards. For example, the control module 14 may be configured to adjust the steering angle based on the adjustment function if the vehicle 100 is configured to move backwards. The control module is further configured to provide the steering angle control signal via the at least one interface 12 based on the determined steering angle. If not specified otherwise, the control module 14 may be configured to perform or execute the method steps of the method as introduced above or below. Figs. 2a and 2b further shows a vehicle 100 comprising the apparatus 10.

The following description relates to both the method of Figs. 1a and/or 1b and to the apparatus 10 and/or vehicle 100 of Figs. 2a and/or 2b.

In embodiments, a driver of a vehicle is assisted at steering a vehicle while moving backwards. For example, if the driver does not turn his head while driving backwards, but uses a camera image on a display (e.g. on a head up display) in front of him, a confusion of the driver while steering the vehicle may be avoided if the steering of the vehicle is adjusted, so that it mimics the handling of the vehicle while moving forwards. To control a steering of the vehicle (e.g. to control the steering angle of the front tires of the vehicle), the steering angle control signal may be provided. For example, the steering angle control signal may be a control signal for controlling the steering angle of the vehicle, e.g. for controlling a power-assisted steering/servo assisted steering of the vehicle. For example, the steering angle control signal may be provided to a power-assisted steering module / to a servo-assisted steering module or to a steering assist system of the vehicle. For example, the steering angle control signal may indicate the steering angle. In at least some embodiments, the steering angle control signal may indicate the steering angle and a steering motion, e.g. may comprise one or more (digital or analog) values for the steering angle and for the steering motion. The steering angle control signal may be provided to a servo motor or to a hydraulic system.

In various embodiments, the vehicle may be one of an automobile, a car, a van, a minivan, a sub-urban vehicle (SUV), a transport vehicle, a truck, a lorry, an agricultural vehicle, a tractor, a combine, a water-based vehicle, a boat, a ship, a forklift, a digger or a loader. In some embodiments, the vehicle may be a vehicle without rear-view mirror, e.g. a vehicle with an obstructed field of view towards the rear of the vehicle. In at least some embodiments, the vehicle may be a vehicle with a trailer.

In embodiments, the information related to the angle of rotation of the steering wheel may be received, e.g. via a vehicle communication bus or via a vehicle communication network. For example, the information related to the rotation of the steering wheel may be obtained 110 via a Controller Area Network (CAN) bus of the vehicle or via a Local Interconnect Network (LIN) of the vehicle 100. For example, the information related to the angle of rotation of the steering wheel may be obtained/received from an angle sensor of the steering wheel. In embodiments, the steering wheel of the vehicle may be the steering wheel of the vehicle used by the driver of the vehicle to steer the vehicle. The steering wheel may comprise a circular shape or a quasi-circular shape, but may also take other shapes, e.g. a quasi-circular shape with cutouts. In at least some embodiments, the steering wheel may be a steering wheel of a power steering system / servo steering system. The terms power steering and servo steering may be used interchangeably in the document.

In some embodiments, the steering wheel of the vehicle may be outside the vehicle, e.g. in a remote location or comprised in a mobile device (e.g. a smartphone or a tablet device). For example, also a head up display of the vehicle as introduced in the following may be located at the remote location or coupled to the mobile device. A driver may remotely control/steer the vehicle from the remote location and/or using the mobile device. For example, the steering angle control signal may be provided from the mobile device or from the remote location to the vehicle. The vehicle and the remote location and/or the mobile device may be connected via a (cellular) mobile communication system. In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Interoperability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In at least some embodiments, the information related to the angle of rotation of the steering wheel may comprise or indicate information on the angle of rotation of the steering wheel and/or information an (angular) steering motion of the steering wheel. In some embodiments, the information related to the angle of rotation of the steering wheel may comprise a value for the angle of rotation of the steering wheel. Alternatively or additionally, the information related to the angle of rotation of the steering wheel may comprise information related to a steering motion, e.g. a value for a change in the value for the angle of rotation, e.g. a delta for the angle of rotation of the steering wheel.

In various embodiments, the information related to the direction of driving of the vehicle may be received, e.g. via a vehicle communication bus or via a vehicle communication network. For example, the information related to the direction of driving may be obtained 120 via a Controller Area Network (CAN) bus of the vehicle or via a Local Interconnect Network (LIN) of the vehicle 100. For example, the information related to the direction of driving may be received from a gearbox module of the vehicle. For example, the information related to the direction of driving may indicate, whether a forward gear or a reverse gear of the vehicle is engaged. If the vehicle is an electric vehicle, the information related to the direction of driving may indicate, whether the vehicle is set to drive forwards or whether the vehicle is set to drive backwards. For example, the vehicle 100 may be (deemed) configured to move forwards if a forward gear of the vehicle is engaged or if the vehicle is set to drive forwards. The vehicle 100 may be (deemed) configured to move backwards if a backward gear of the vehicle is engaged or if the vehicle is set to drive backwards.

In at least some embodiments, the angle of rotation of the steering wheel may be translated into the steering angle based on the information related to the direction of driving of the vehicle and based on the adjustment function. For example, the adjustment function might only be used if the vehicle is configured to move backwards. A further adjustment function might be used if the vehicle is configured to drive forwards. In some embodiments, if the vehicle is configured to move forwards, the angle of rotation of the steering wheel may be directly used for the steering angle, e.g. without using a further adjustment function. The adjustment function may be an adjustment function for adjusting the steering angle of the vehicle for backward driving.

In at least some embodiments, the adjustment function is a linear adjustment function. For example, the adjustment function may cause the steering angle of the vehicle to change less for a given steering motion (change in the angle of rotation) of the steering wheel than without the adjustment function. For example, the steering angle may be adjusted based on the adjustment function such that, if the angle of rotation of the steering wheel is changed, a change in the steering angle if the vehicle 100 is configured to move backwards is smaller than a change in the steering angle if the vehicle 100 is configured to move forwards. In some embodiments, the steering angle may be adjusted based on the adjustment function such that a maximal steering angle is smaller if the vehicle is configured to move backwards than if the vehicle is configured to move forwards. Alternatively, the steering angle may be adjusted based on the adjustment function such that a perceptible feedback is provided to the driver of the vehicle if a steering angle threshold is crossed.

In various embodiments, the adjustment function may be a non-linear adjustment function. For example, the steering angle is adjusted based on the adjustment function such that a handling of the vehicle 100 while moving backwards mimics a handling of the vehicle 100 while moving forwards. For example, the steering angle may be adjusted based on the adjustment function such that an effective steering angle of the vehicle going backwards is the same as the steering angle going forwards. In at least some embodiments, the steering angle may be adjusted based on the adjustment function such that an angle of driving (as seen from the rear of the vehicle) is similar (e.g. substantially the same or the same) to an angle of driving (as seen from the front of the vehicle) for a given angle of rotation of the steering wheel. For example, the adjustment function may comprise one or more values or ranges of values and one or more translation factors between the angle of rotation of the steering wheel and the steering angle of the vehicle associated with the one or more values or ranges of values.

In some embodiments, the method may be performed by a vehicle (e.g. a truck or a semi) with a trailer. The truck may comprise the apparatus 10. If the vehicle 100 is a vehicle with a trailer, the adjustment function may be based on a movement interaction between the vehicle and the trailer when reversing. For example, if the vehicle reverses to the right, the trailer may reverse to the left, based on the angle between vehicle and trailer. The steering angle may be adjusted based on a movement interaction between the vehicle and the trailer and/or based on an angle between the vehicle and the trailer. The adjustment function may be further based on the angle between the vehicle and the trailer. The method may further comprise obtaining information related to an angle between the vehicle and the trailer. For example, the steering angle may be adjusted based on the adjustment function such that a handling of the vehicle 100 with the trailer while moving backwards mimics a handling of the vehicle 100 with the trailer while moving forwards. In at least some embodiments, the steering angle may be adjusted based on the adjustment function such that an angle of driving (as seen from the rear of the trailer) is similar (e.g. substantially the same or the same) to an angle of driving (as seen from the front of the vehicle) for a given angle of rotation of the steering wheel.

In at least some embodiments, the steering angle control signal is transmitted to a servo motor of a servo steering system / a power steering system of the vehicle, e.g. using the vehicle communication bus or via a vehicle communication network. For example, the steering angle control signal may indicate the determined 130 steering angle, e.g. as (digital) angular value or as current or voltage. Alternatively, the steering angle control signal may indicate, whether the steering angle is to be adjusted to left or right (e.g. as seen when looking out the front of the vehicle or relative to the direction of driving) or clockwise or counterclockwise (e.g. as seen from the top of the vehicle).

In at last some embodiments, as shown in Fig. 1b, the method further comprises providing 150 a rear view video signal to a Head Up Display (HUD, or head-up-display) of the vehicle 100.

Embodiments further provide a vehicle comprising the apparatus 10 and the head up display. In at least some embodiments, the rear view video signal might only be displayed on the head up display if the vehicle is configured to move backwards. For example, the head up display may be integrated in a front window (e.g. a windshield) of the vehicle. For example, the head up display may be integrated as (transparent or semi-transparent) Liquid Crystal Display (LCD) or as (transparent or semi-transparent) Organic Light Emitting Diode (OLED) display within or on the front window of the vehicle. Alternatively, the head up display may be based on a projection of the rear view video signal onto the front window or onto a transparent or semi-transparent screen in front of the front window (e.g. between the front window and a driver of the vehicle) of the vehicle. The rear view video signal may be projected onto the front window or into the transparent or semi-transparent screen in front of the front window. In at least some embodiments, the rear view video signal comprises a video stream based on a rear view camera signal of a rear view camera of the vehicle. The rear view video signal may be provided to the head up display using a (dedicated) video transmission cable. Alternatively, the rear view video signal may be provided to the head up display via the vehicle communication bus or via the vehicle communication network. In some embodiments, the method further comprises darkening, clouding or blurring the front window / windshield of the vehicle if the vehicle 100 is configured to move backwards, e.g. to allow the driver to concentrate on the rear view video signal. For example, the front window / windshield of the vehicle may be smart glass or switchable glass configured to darken, cloud or blur if the vehicle is configured to move backwards. In at least some embodiments, the method further comprises providing a control signal to the front window / windshield of the vehicle to affect a darkening, clouding or blurring of the window. The control module 14 may be configured to provide the control signal to the front window / windshield via the at least one interface 12. The control module 14 may be configured to provide the rear view video signal to the head up display via the at least one interface 12.

In embodiments, as further shown in Fig. 1b, the method further comprises processing 152 a rear view camera signal to determine 154 the rear view video signal. For example, the processing 152 may comprise at least one element of the group of cropping the rear view camera signal, rectifying the rear view camera signal, dewarping (e.g. straightening out) the rear view camera signal, warping (e.g. skewing) the rear view camera signal, adjusting a brightness of the rear view camera signal, adjusting a contrast of the rear view camera signal and stitching the rear view camera signal of a plurality of rear view cameras to determine 154 the rear view video signal. For example, the rear view camera may be arranged behind (e.g. in the interior of the vehicle) the rear view window of the vehicle. In some embodiments, the rear view camera signal may comprise video signals from a plurality of rear view cameras. In this case, the rear view camera signal may be provided by the plurality of rear view cameras. If the method is used in a truck, the rear view camera or the plurality of rear view cameras may be arranged at the rear-back of the truck, e.g. at the rear/back of a cargo area of the truck or at the rear/back of a trailer of the truck. For example, the rear view camera signal is processed 152 (e.g. cropped and warped/dewarped) so that the rear view video signal mimics a view through the rear window of the vehicle 100 when displayed by the head up display (at the front window of the vehicle). For example, the rear view video signal may be displayed by the head up display such that it looks like the driver is looking out through the rear window of the vehicle. The rear view camera signal may be processed 152 so that the rear view video signal displays a view as seen through the rear window of the vehicle for the rear view video signal. If the vehicle has no rear window, the rear view camera signal may be processed 152 so that the rear view video signal displays a view as seen through a virtual rear window of the vehicle for the rear view video signal. In at least some embodiments, the rear view video signal comprises a horizontally mirrored version of the rear view camera signal. For example, in the rear view video signal, an object seen on the left when looking out the rear window vehicle may be displayed on the right (as seen from the drivers perspective) in the rear view camera signal (and on the right on the head up display), and vice versa. The processing 152 of the rear view camera signal may comprise horizontally mirroring the rear view camera signal to determine 154 the rear view video signal. Alternatively, the rear view video signal may comprise an un-mirrored version (a version of the rear view camera signal that is not horizontally mirrored through processing 152) of the rear view camera signal. For example, in the rear view video signal, an object seen on the left when looking out the rear window vehicle may be displayed on the left (as seen from the drivers perspective) in the rear view camera signal (and on the left on the head up display). The adjustment function may be adapted to reverse a steering motion of the steering wheel comprised in the information related to the angle of rotation of the steering wheel in the determination 130 of the steering angle. For example, if the driver rotates the steering wheel to the right (e.g. clockwise), the steering angle may be shifted to the left (e.g. counterclockwise as seen from the top of the vehicle).

In various embodiments, additional information, e.g. a projection of a heading of the vehicle, distance sensor data or mapping data, may be embedded in the rear view video signal. For example, the additional information may be overlaid over the rear view camera signal within the rear view video signal.

In some embodiments, as shown in Fig. ab, the method further comprises determining 156 information related to a heading of the vehicle 100 while moving backwards based on the determined 130 steering angle. For example, the information related to the heading of the vehicle 100 may comprise information related to a projected path of the vehicle while moving backwards, e.g. a two-dimensional or three-dimensional projection of the path of the vehicle moving backwards based on the determined 130 steering angle. The provided 150 rear view video signal may comprise a projection (e.g. a prognosis or prediction) of the heading of the vehicle 100 (while) moving backwards, e.g. a projection of a path of the vehicle if the vehicle 100 continues to move using the (current) steering angle. For example, the rear view video signal may comprise an overlay of the heading of the vehicle 100 (while) moving backwards. The rear view video signal may be provided 150 to the head up display of the vehicle 100 with an overlay comprising the projection of the heading of the vehicle 100 (while) moving backwards.

In various embodiments, as further shown in Fig. 1b, the method further comprises determining 160 a distance sensor data overlay for the rear view video signal based on distance sensor data. The method may further comprise obtaining or receiving the distance sensor data from a distance sensor module. The apparatus 10 may further comprise, as shown in Fig. 2b, the distance sensor module 16. The distance sensor module may comprise at least one of a RADAR (Radio Detection and Ranging) sensor, a LIDAR (Light Detection and Ranging), an ultrasound sensor, a visual sensor and a Time of Flight sensor. The distance sensor module may be configured to provide the distance sensor data. For example, the distance sensor data may comprise information related to a distance of one or more objects behind the rear of the vehicle. For example, the distance sensor data may comprise a point cloud of distance information. The distance sensor data may comprise information related to a distance of a plurality of points from the distance sensor module, e.g. information related to a depth of a space in a vicinity of the distance sensor module demarcated by objects surrounding the distance sensor module. For example, the distance sensor data overlay may comprise a simplified version of the distance sensor data, e.g. a smoothed-out version of the distance sensor data. In some embodiments, the method further comprises detecting objects within the distance sensor data. For example, the distance sensor data overlay may comprise a (colored, outlined or highlighted) representation of (detected) objects or of edges of (detected) objects comprised in the distance sensor data. The rear view video signal may be provided 150 to the head up display of the vehicle 100 with the distance sensor data overlay. For example, the rear view video signal may comprise an overlay of the distance sensor data, e.g. the distance sensor data overlay.

In some embodiments, the method further comprises determining 158 a map overlay for the rear view video signal based on mapping data. For example, the map overlay may comprise or show demarcations of road structures, e.g. an edge of the road or a traffic obstacle. In some embodiments, the map overlay may be overlaid over the rear video camera signal and/or aligned with the rear video camera signal based on a matching of one or more objects located behind the rear of the vehicle and one or more objects comprised or represented in the rear video camera signal. The rear view video signal may be provided 150 to the head up display of the vehicle 100 with the map overlay. For example, the rear view video signal may comprise an overlay of the distance mapping data, e.g. the map overlay. In at least some embodiments, the mapping data may be or comprise one or more High Definition (HD) maps, e.g. maps having an allowable error of less than 10cm.

In some embodiments, the method further comprises providing 170 a throttle control signal to an engine of the vehicle 100. The throttle control signal may be a control signal for controlling an acceleration of the vehicle 100, e.g. by controlling the engine of the vehicle. For example, the throttle control signal may be suitable for controlling or affecting a velocity of a movement of the vehicle. For example, the providing 170 of the throttle control signal may be based on the information related to a direction of driving. The throttle control signal may be limited by a throttle threshold if the vehicle 100 is configured to move backwards. For example, the throttle control signal may be provided 170 such that a velocity of the vehicle remains below a velocity threshold and/or such that an acceleration of the vehicle remains below an acceleration threshold if the vehicle 100 is configured to move backwards. The throttle threshold may be or comprise the velocity threshold and/or the acceleration threshold. Alternatively or additionally, the method may further comprise determining 180 information related to a distance of the vehicle 100 to one or more objects behind the rear of the vehicle 100 based on the distance sensor data. The throttle control signal may be provided 170 to the engine of the vehicle 100 based on the information related to the distance of the vehicle 100 to the one or more objects. For example, the throttle control signal may be limited by the information related to the distance of the vehicle 100 to the one or more objects. In at least some embodiments, the throttle control signal may be adjusted to a lower value if the distance of the vehicle to the one or more objects is below a threshold. In some embodiments, the method further comprises providing a break control signal based on the information related to the distance of the vehicle 100 to the one or more objects. For example, the break control signal may be provided to decelerate the vehicle 100 if the distance of the vehicle to the one or more objects is below a threshold. The control module 14 may be configured to provide the throttle control signal and/or the break control signal via the at least one interface 12.

The at least one interface 12 may correspond to one or more inputs and/or outputs for receiving and/or transmitting information, which may be in digital (bit) values according to a specified code, within a module, between modules or between modules of different entities. In various embodiments, the at least one interface 12 may be configured to communicate via a vehicle communication bus or via a vehicle communication network. For example, the at least one interface may be configured to communicate via a Controller Area Network (CAN) bus of the vehicle or via a Local Interconnect Network (LIN) of the vehicle. In embodiments the control module 14 may be implemented using one or more processing units, one or more processing devices, any means for processing, such as a processor, a computer or a programmable hardware component being operable with accordingly adapted software. In other words, the described function of the control module 14 may as well be implemented in software, which is then executed on one or more programmable hardware components. Such hardware components may comprise a general purpose processor, a Digital Signal Processor (DSP), a micro-controller, etc. The control module 14 is coupled with the at least one interface and with the (optional) distance sensor module 16.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention as defined by the appended claims and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### List of reference signs

- 10: Apparatus
- 12: Interface
- 14: Control module
- 16: Distance sensor module
- 100: Vehicle
- 110: Obtaining information related to an angle of rotation of a steering wheel
- 120: Obtaining information related to a direction of driving of a vehicle
- 130: Determining a steering angle for the vehicle
- 140: Providing a steering angle control signal
- 150: Providing a rear view video signal
- 152: Processing a rear view camera signal
- 154: Determining the rear view video signal
- 156: Determining information related to a heading of the vehicle
- 158: Determining a map overlay
- 160: Determining a distance sensor overlay
- 170: Providing a throttle control signal
- 180: Determining information related to a distance of the vehicle to one or more objects

## Claims

1. A method for providing a steering angle control signal for a vehicle (100), the method comprising:
obtaining (110) information related to an angle of rotation of a steering wheel of the vehicle (100);
obtaining (120) information related to a direction of driving of the vehicle (100), wherein the information related to the direction of driving indicates, whether the vehicle (100) is configured to move forwards or whether the vehicle (100) is configured to move backwards;
determining (130) a steering angle for the vehicle (100) based on the angle of rotation of the steering wheel and based on the information related to the direction of driving of the vehicle (100), wherein the steering angle is adjusted based on an adjustment function if the vehicle (100) is configured to move backwards,
wherein the steering angle is adjusted based on the adjustment function such that a handling of the vehicle (100) while moving backwards mimics a handling of the vehicle (100) while moving forwards;
providing (140) the steering angle control signal based on the determined (130) steering angle;
providing (150) a rear view video signal to a head up display of the vehicle (100); and
processing (152) a rear view camera signal to determine (154) the rear view video signal, wherein the rear view camera signal is processed (152) so that the rear view video signal mimics a view through the rear window of the vehicle (100) when displayed by the head up display.

2. The method according to claim 1, wherein the steering angle is adjusted based on the adjustment function such that, if the angle of rotation of the steering wheel is changed, a change in the steering angle if the vehicle (100) is configured to move backwards is smaller than a change in the steering angle if the vehicle (100) is configured to move forwards.

3. The method according to one of the previous claims, further comprising determining (156) information related to a heading of the vehicle (100) while moving backwards based on the determined (130) steering angle, wherein the provided (150) rear view video signal comprises a projection of the heading of the vehicle (100) moving backwards.

4. The method according to one of the previous claims, wherein the rear view video signal comprises a horizontally mirrored version of a rear view camera signal of a rear view camera of the vehicle (100).

5. The method according to one of the previous claims, wherein the rear view video signal comprises an un- mirrored version of a rear view camera signal of a rear view camera of the vehicle (100) and wherein the adjustment function is adapted to reverse a steering motion of the steering wheel comprised in the information related to the angle of rotation of the steering wheel in the determination (130) of the steering angle.

6. The method according to one of the previous claims further comprising determining (158) a map overlay for the rear view video signal based on mapping data, wherein the rear view video signal is provided (150) to the head up display of the vehicle (100) with the map overlay.

7. The method according to one of the previous claims further comprising determining (160) a distance sensor data overlay for the rear view video signal based on distance sensor data, wherein the rear view video signal is provided (150) to the head up display of the vehicle (100) with the distance sensor data overlay.

8. The method according to one of the previous claims further comprising providing (170) a throttle control signal to an engine of the vehicle (100) based on the information related to a direction of driving, wherein the throttle control signal is limited by a throttle threshold if the vehicle (100) is configured to move backwards.

9. The method according to one of the previous claims further comprising determining (180) information related to a distance of the vehicle (100) to one or more objects behind the rear of the vehicle (100) based on distance sensor data, and further comprising providing (170) a throttle control signal to an engine of the vehicle (100) based on the information related to the distance of the vehicle (100) to the one or more objects.

10. A computer program having a program code for performing the method according to one of the previous claims, when the computer program is executed on a computer, a processor, or a programmable hardware component.

11. An apparatus (10) for providing a steering angle control signal for a vehicle (100), the apparatus (10) comprising:
at least one interface (12); and
a control module (14) configured to:
obtain information related to an angle of rotation of a steering wheel of the vehicle (100) via the at least one interface (12);
obtain information related to a direction of driving of the vehicle (100) via the at least one interface (12),
wherein the information related to the direction of driving indicates, whether the vehicle (100) is configured to move forwards or whether the vehicle (100) is configured to move backwards;
determine a steering angle for the vehicle (100) based on the angle of rotation of the steering wheel and based on the information related to the direction of driving of the vehicle (100),
wherein the steering angle is adjusted based on an adjustment function if the vehicle (100) is configured to move backwards,
wherein the steering angle is adjusted based on the adjustment function such that a handling of the vehicle (100) while moving backwards mimics a handling of the vehicle (100) while moving forwards,
provide the steering angle control signal via the at least one interface (12) based on the determined steering angle
provide a rear view video signal to a head up display of the vehicle (100), and
process a rear view camera signal to determine (154) the rear view video signal, wherein the rear view camera signal is processed (152) so that the rear view video signal mimics a view through the rear window of the vehicle (100) when displayed by the head up display.

12. A vehicle (100) comprising the apparatus (10) of claim 11.

## Patentansprüche

1. Verfahren zum Bereitstellen eines Lenkwinkelsteuersignals für ein Fahrzeug (100), das Verfahren umfassend:
Erhalten (110) von Informationen, die sich auf einen Drehwinkel eines Lenkrads des Fahrzeugs (100) beziehen;
Erhalten (120) von Informationen, die sich auf eine Fahrtrichtung des Fahrzeugs (100) beziehen, wobei die Informationen, die sich auf die Fahrtrichtung beziehen, angeben, ob das Fahrzeug (100) konfiguriert ist, um sich vorwärts zu bewegen, oder ob das Fahrzeug (100) konfiguriert ist, um sich rückwärts zu bewegen;
Bestimmen (130) eines Lenkwinkels für das Fahrzeug (100) basierend auf dem Drehwinkel des Lenkrads und basierend auf den Informationen, die sich auf die Fahrtrichtung des Fahrzeugs (100) beziehen, wobei der Lenkwinkel basierend auf einer Einstellfunktion eingestellt wird, falls das Fahrzeug (100) konfiguriert ist, um sich rückwärts zu bewegen, wobei der Lenkwinkel basierend auf der Einstellfunktion derart eingestellt wird, dass eine Handhabung des Fahrzeugs (100) während des Rückwärtsbewegens eine Handhabung des Fahrzeugs (100) während des Vorwärtsbewegens imitiert;
Bereitstellen (140) des Lenkwinkelsteuersignals basierend auf dem bestimmten (130) Lenkwinkel;
Bereitstellen (150) eines Rückfahrvideosignals an ein Head-up-Display des Fahrzeugs (100); und
Verarbeiten (152) eines Rückfahrkamerasignals, um das Rückfahrvideosignal zu bestimmen (154), wobei das Rückfahrkamerasignal verarbeitet (152) wird, sodass das Rückfahrvideosignal eine Ansicht durch das Rückfenster des Fahrzeugs (100) imitiert, wenn es durch das Head-up-Display angezeigt wird.

2. Verfahren nach Anspruch 1, wobei der Lenkwinkel basierend auf der Einstellfunktion derart eingestellt wird, dass, falls der Drehwinkel des Lenkrads geändert wird, eine Änderung des Lenkwinkels, falls das Fahrzeug (100) konfiguriert ist, um sich rückwärts zu bewegen, kleiner als eine Änderung des Lenkwinkels ist, falls das Fahrzeug (100) konfiguriert ist, um sich vorwärts zu bewegen.

3. Verfahren nach einem der vorstehenden Ansprüche, ferner umfassend das Bestimmen (156) von Informationen, die sich auf einen Kurs des Fahrzeugs (100) beziehen, während es sich basierend auf dem bestimmten (130) Lenkwinkel rückwärts bewegt, wobei das bereitgestellte (150) Rückfahrvideosignal eine Projektion des Kurses des sich rückwärts bewegenden Fahrzeugs (100) umfasst.

4. Verfahren nach einem der vorstehenden Ansprüche, wobei das Rückfahrvideosignal eine horizontal gespiegelte Version eines Rückfahrkamerasignals einer Rückfahrkamera des Fahrzeugs (100) umfasst.

5. Verfahren nach einem der vorstehenden Ansprüche, wobei das Rückfahrvideosignal eine ungespiegelte Version eines Rückfahrkamerasignals einer Rückfahrkamera des Fahrzeugs (100) umfasst und wobei die Einstellfunktion eingestellt ist, um eine Lenkbewegung des Lenkrads, die in den Informationen umfasst ist, die sich auf den Drehwinkel des Lenkrads bei der Bestimmung (130) des Lenkwinkels beziehen, umzukehren.

6. Verfahren nach einem der vorstehenden Ansprüche, ferner umfassend das Bestimmen (158) einer Abbildungsüberlagerung für das Rückfahrvideosignal basierend auf Abbildungsdaten, wobei das Rückfahrvideosignal dem Head-up-Display des Fahrzeugs (100) mit der Abbildungsüberlagerung bereitgestellt (150) wird.

7. Verfahren nach einem der vorstehenden Ansprüche, ferner umfassend das Bestimmen (160) einer Abstandssensordatenüberlagerung für das Rückfahrvideosignal basierend auf Abstandssensordaten, wobei das Rückfahrvideosignal dem Head-up-Display des Fahrzeugs (100) mit der Abstandssensordatenüberlagerung bereitgestellt (150) wird.

8. Verfahren nach einem der vorstehenden Ansprüche, ferner umfassend das Bereitstellen (170) eines Drosselsteuersignals an einen Motor des Fahrzeugs (100) basierend auf den Informationen, die sich auf eine Fahrtrichtung beziehen, wobei das Drosselsteuersignal durch eine Drosselschwelle begrenzt ist, falls das Fahrzeug (100) konfiguriert ist, um sich rückwärts zu bewegen.

9. Verfahren nach einem der vorstehenden Ansprüche, ferner umfassend das Bestimmen (180) von Informationen, die sich auf einen Abstand des Fahrzeugs (100) zu einem oder mehreren Objekten hinter der Rückseite des Fahrzeugs (100) beziehen, basierend auf Abstandssensordaten, und ferner umfassend das Bereitstellen (170) eines Drosselsteuersignals an einen Motor des Fahrzeugs (100) basierend auf den Informationen, die sich auf den Abstand des Fahrzeugs (100) zu dem einen oder den mehreren Objekten beziehen.

10. Computerprogramm, das einen Programmcode zum Durchführen des Verfahrens nach einem der vorstehenden Ansprüche aufweist, wenn das Computerprogramm auf einem Computer, einem Prozessor oder einer programmierbaren Hardwarekomponente ausgeführt wird.

11. Einrichtung (10) zum Bereitstellen eines Lenkwinkelsteuersignals für ein Fahrzeug (100), die Einrichtung (10) umfassend:
mindestens eine Schnittstelle (12); und
ein Steuermodul (14), das konfiguriert ist zum:
Erhalten von Informationen, die sich auf einen Drehwinkel eines Lenkrads des Fahrzeugs (100) beziehen, über die mindestens eine Schnittstelle (12);
Erhalten von Informationen, die sich auf eine Fahrtrichtung des Fahrzeugs (100) beziehen, über die mindestens eine Schnittstelle (12),
wobei die Informationen, die sich auf die Fahrtrichtung beziehen, angeben, ob das Fahrzeug (100) konfiguriert ist, um sich vorwärts zu bewegen, oder ob das Fahrzeug (100) konfiguriert ist, um sich rückwärts zu bewegen;
Bestimmen eines Lenkwinkels für das Fahrzeug (100) basierend auf dem Drehwinkel des Lenkrads und basierend auf den Informationen, die sich auf die Fahrtrichtung des Fahrzeugs (100) beziehen,
wobei der Lenkwinkel basierend auf einer Einstellfunktion eingestellt wird, falls das Fahrzeug (100) konfiguriert ist, um sich rückwärts zu bewegen,
wobei der Lenkwinkel basierend auf der Einstellfunktion derart eingestellt wird, dass eine Handhabung des Fahrzeugs (100) während des Rückwärtsbewegens eine Handhabung des Fahrzeugs (100) während des Vorwärtsbewegens imitiert,
Bereitstellen des Lenkwinkelsteuersignals über die mindestens eine Schnittstelle (12) basierend auf dem bestimmten Lenkwinkel,
Bereitstellen eines Rückfahrvideosignals an ein Head-up-Display des Fahrzeugs (100) und
Verarbeiten eines Rückfahrkamerasignals, um das Rückfahrvideosignal zu bestimmen (154), wobei das Rückfahrkamerasignal verarbeitet (152) wird, sodass das Rückfahrvideosignal eine Ansicht durch das Rückfenster des Fahrzeugs (100) imitiert, wenn es durch das Head-up-Display angezeigt wird.

12. Fahrzeug (100), umfassend die Einrichtung (10) nach Anspruch 11.

## Revendications

1. Procédé de fourniture d'un signal de commande d'angle de braquage pour un véhicule (100), le procédé comprenant :
l'obtention (110) d'informations relatives à un angle de rotation d'un volant du véhicule (100) ;
l'obtention (120) d'informations relatives à une direction de conduite du véhicule (100), dans lequel les informations relatives à la direction de conduite indiquent, si le véhicule (100) est configuré pour se déplacer vers l'avant ou si le véhicule (100) est configuré pour se déplacer vers l'arrière ;
la détermination (130) d'un angle de braquage pour le véhicule (100) sur la base de l'angle de rotation du volant et sur la base des informations relatives à la direction de conduite du véhicule (100), dans lequel l'angle de braquage est réglé sur la base d'une fonction de réglage si le véhicule (100) est configuré pour se déplacer vers l'arrière, dans lequel l'angle de braquage est réglé sur la base de la fonction de réglage de telle sorte qu'une manipulation du véhicule (100) se déplaçant vers l'arrière imite une manipulation du véhicule (100) se déplaçant vers l'avant ;
la fourniture (140) du signal de commande d'angle de braquage sur la base de l'angle de braquage déterminé (130) ;
la fourniture (150) d'un signal vidéo de vue arrière à un affichage tête haute du véhicule (100) ; et
le traitement (152) d'un signal de caméra de vue arrière pour déterminer (154) le signal vidéo de vue arrière, le signal de caméra de vue arrière étant traité (152) de sorte que le signal vidéo de vue arrière imite une vue à travers la vitre arrière du véhicule (100) lorsqu'il est affiché par l'affichage tête haute.

2. Procédé selon la revendication 1, dans lequel l'angle de braquage est réglé sur la base de la fonction de réglage de telle sorte que, si l'angle de rotation du volant est modifié, un changement de l'angle de braquage si le véhicule (100) est configuré pour se déplacer vers l'arrière soit plus petit qu'un changement de l'angle de braquage si le véhicule (100) est configuré pour se déplacer vers l'avant.

3. Procédé selon l'une des revendications précédentes, comprenant en outre la détermination (156) d'informations relatives à un cap du véhicule (100) se déplaçant vers l'arrière sur la base de l'angle de braquage (130) déterminé, dans lequel le signal vidéo de vue arrière (150) fourni comprend une projection du cap du véhicule (100) se déplaçant vers l'arrière.

4. Procédé selon l'une des revendications précédentes, dans lequel le signal vidéo de vue arrière comprend une version en miroir horizontal d'un signal de caméra de vue arrière d'une caméra de vue arrière du véhicule (100).

5. Procédé selon l'une des revendications précédentes, dans lequel le signal vidéo de vue arrière comprend une version non en miroir d'un signal de caméra de vue arrière d'une caméra de vue arrière du véhicule (100) et dans lequel la fonction de réglage est conçue pour inverser un mouvement de braquage du volant compris dans les informations relatives à l'angle de rotation du volant lors de la détermination (130) de l'angle de braquage.

6. Procédé selon l'une des revendications précédentes comprenant en outre la détermination (158) d'une superposition cartographique pour le signal vidéo de vue arrière sur la base de données cartographiques, dans lequel le signal vidéo de vue arrière est fourni (150) à l'affichage tête haute du véhicule (100) avec la superposition cartographique.

7. Procédé selon l'une des revendications précédentes comprenant en outre la détermination (160) d'une superposition de données de capteur de distance pour le signal vidéo de vue arrière sur la base de données de capteur de distance, dans lequel le signal vidéo de vue arrière est fourni (150) à l'affichage tête haute du véhicule (100) avec la superposition de données de capteur de distance.

8. Procédé selon l'une des revendications précédentes comprenant en outre la fourniture (170) d'un signal de commande de papillon des gaz à un moteur du véhicule (100) sur la base des informations relatives à une direction de conduite, dans lequel le signal de commande de papillon des gaz est limité par un seuil de papillon des gaz si le véhicule (100) est configuré pour se déplacer vers l'arrière.

9. Procédé selon l'une des revendications précédentes comprenant en outre la détermination (180) d'informations relatives à une distance du véhicule (100) à un ou plusieurs objets derrière l'arrière du véhicule (100) sur la base de données de capteur de distance, et comprenant en outre la fourniture (170) d'un signal de commande de papillon des gaz à un moteur du véhicule (100) sur la base des informations relatives à la distance du véhicule (100) à l'objet ou aux objets.

10. Programme informatique ayant un code de programme pour mettre en oeuvre le procédé selon l'une des revendications précédentes, lorsque le programme informatique est exécuté sur un ordinateur, un processeur, ou un composant matériel programmable.

11. Appareil (10) pour fournir un signal de commande d'angle de braquage pour un véhicule (100), l'appareil (10) comprenant :
au moins une interface (12) ; et
un module de commande (14) configuré pour :
obtenir des informations relatives à un angle de rotation d'un volant du véhicule (100) par l'intermédiaire de l'au moins une interface (12) ;
obtenir des informations relatives à une direction de conduite du véhicule (100) par l'intermédiaire de l'au moins une interface (12),
dans lequel les informations relatives à la direction de conduite indiquent, si le véhicule (100) est configuré pour se déplacer vers l'avant ou si le véhicule (100) est configuré pour se déplacer vers l'arrière ;
déterminer un angle de braquage pour le véhicule (100) sur la base de l'angle de rotation du volant et sur la base des informations relatives à la direction de conduite du véhicule (100),
dans lequel l'angle de braquage est réglé sur la base d'une fonction de réglage si le véhicule (100) est configuré pour se déplacer vers l'arrière,
dans lequel l'angle de braquage est réglé sur la base de la fonction de réglage de telle sorte qu'une manipulation du véhicule (100) se déplaçant vers l'arrière imite une manipulation du véhicule (100) se déplaçant vers l'avant,
fournir le signal de commande d'angle de braquage par l'intermédiaire de l'au moins une interface (12) sur la base de l'angle de braquage déterminé
fournir un signal vidéo de vue arrière à un affichage tête haute du véhicule (100), et
traiter un signal de caméra de vue arrière pour déterminer (154) le signal vidéo de vue arrière, le signal de caméra de vue arrière étant traité (152) de sorte que le signal vidéo de vue arrière imite une vue à travers la vitre arrière du véhicule (100) lorsqu'il est affiché par l'affichage tête haute.

12. Véhicule (100) comprenant l'appareil (10) selon la revendication 11.
